# EUROPEAN PATENT SPECIFICATION

(11) **EP 2 936 328 B1**
(45) Date of publication and mention of the grant of the patent: **09.08.2017**
(21) Application number: 13805424.2
(22) Date of filing: 16.12.2013
(51) Int. Cl.: G06F 13/42

(54) **ELECTRICAL NODE FOR DAISY-CHAIN BUSES WITH SERIAL DATA TRANSMISSION AND CONCURRENT TRANSMISSION OF ELECTRIC ENERGY**
ELEKTRISCHER KNOTEN FÜR DAISY-CHAIN-SCHIENEN MIT SERIELLER DATENÜBERTRAGUNG UND GLEICHZEITIGER ÜBERTRAGUNG ELEKTRISCHER ENERGIE
NOEUD ÉLECTRIQUE POUR BUS EN CHAÎNES AVEC ÉMISSION DE DONNÉES SÉRIELLES ET ÉMISSION SIMULTANÉE D'ÉNERGIE ÉLECTRIQUE

(30) Priority: 21.12.2012 IT AN20120171
(43) Date of publication of application: 28.10.2015
(73) Proprietor: Turbo S.r.l., 20811 Cesano Maderno (MB) (IT)
(72) Inventor: MESSINA, Fabrizio, 20030 Senago (MI) (IT)
(74) Representative: Premru, Rok
(86) International application number: PCT/EP2013/076778
(87) International publication number: WO 2014/095769

(56) References cited:
- WO-A1-2011/092676
- US-A1- 2003 070 027
- US-B1- 6 961 792

## Description

There is disclosed herein below a device designed for use as an electrical node for forming daisy-chain buses with simultaneous serial data transmission and power transmission.

As used herein, "bus" is intended to designate a data and power transmission line for a plurality of electric and/or electronic devices.

Buses are used in the field of industrial automation as they allow connection of a great number of devices to an electronic controller using a very small number of wires.

For example, in the current state of the art, a three-wire bus (with one wire for unidirectional 32-bit serial data transmission (simplex) and two wires for power transmission) is sufficient to selectively actuate at least as many as 127 electric/electronic devices.

The term daisy-chain is intended to designate an interconnection in which nodes are connected one after the other, excepting the first node of the chain (which is connected to a controller, e.g. a PLC) and the last node of the chain.

WO 2011/092676 A1 discloses an electrical node, namely an USB device, for making daisy-chain buses with serial data transmission and concurrent transmission of electric energy which comprises a first connector, a second connector, a third connector and an electronic device suitable for reading a scheme arriving from the third connector.

The need is felt in the field of automation to create daisy chain buses with as many nodes as needed (i.e. according to the number of points of use to be controlled).

A further strongly-felt need is to reduce the costs of forming daisy-chain buses.

The object of this invention is to provide a solution to prior art problems and particularly to the above mentioned problems.

This object is fulfilled by a device designed for use as an electrical node for forming daisy-chain buses, as defined in claim 1.

Further advantages are achieved by the additional features of the dependent claims.

One possible embodiment of a quick electric connector for forming daisy-chain buses will be described hereafter with reference to the accompanying drawings, in which:

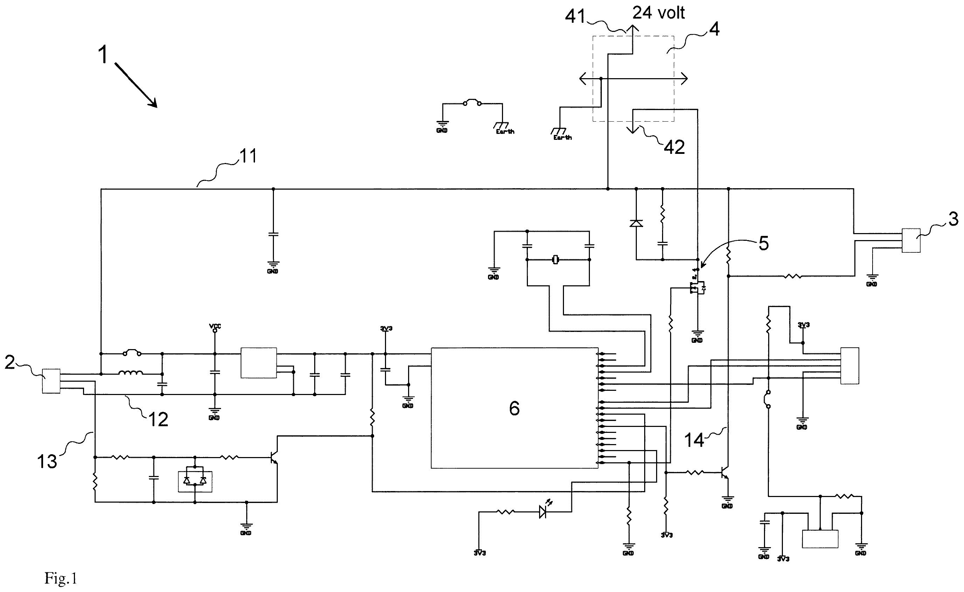

- Figure 1 shows a circuit of an electrical node for a daisy-chain bus;

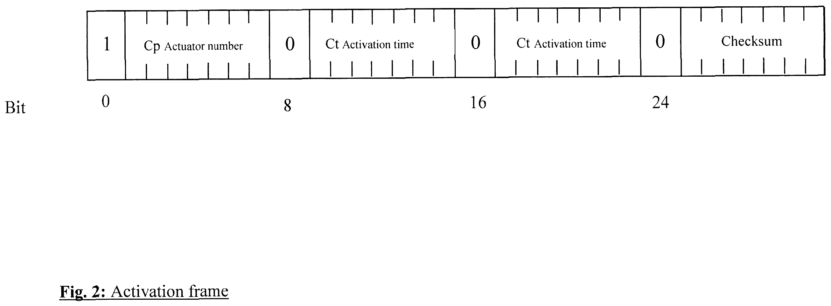

- Figure 2 shows the structure of the activation frame transmitted through the nodes of the bus of Figure 1;

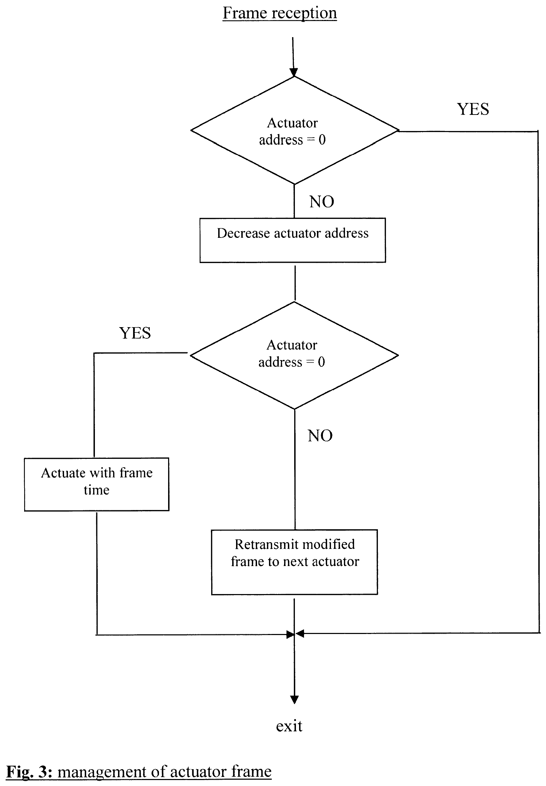

- Figure 3 is a flow chart that shows how the information (activation frame) received from a bus node is processed;

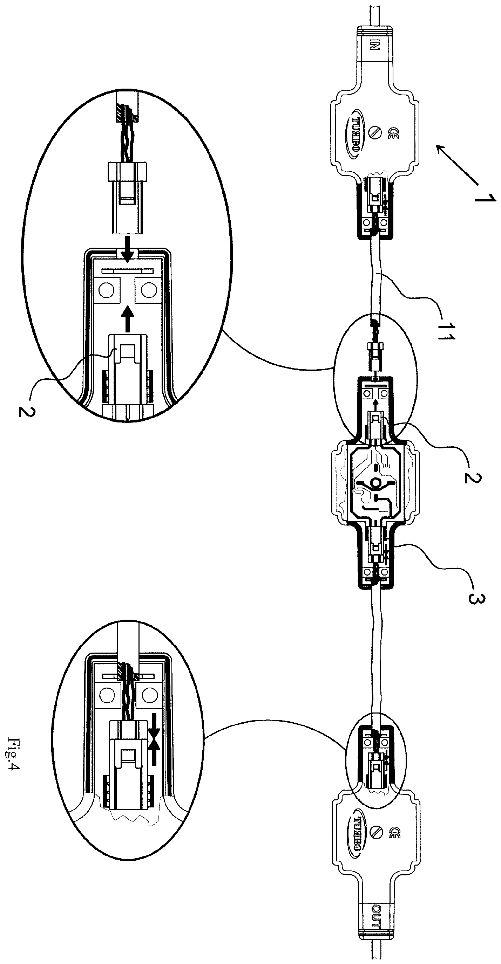

- Figure 4 is a drawing that shows a portion of a daisy-chain bus;

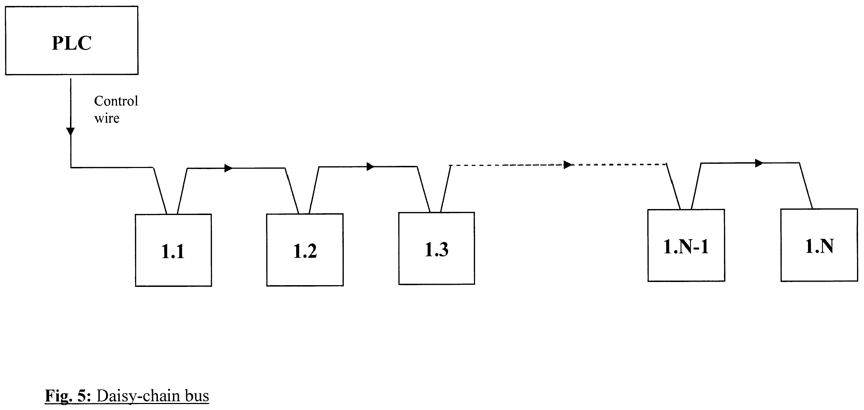

- Figure 5 is a schematic drawing that shows a daisy-chain bus;

Referring to the accompanying drawings, numeral 1 generally designates a device designed for use as an electrical node for forming daisy-chain buses with simultaneous serial data transmission and power transmission.

Series connection of multiple nodes 1.1, 1.2... 1.N-1, 1.N can provide a bus, which is connected to a programmable-logic controller (PLC) or another process controller, for selectively controlling a plurality of electric and/or electronic points of use (not shown).

The electrical node 1 comprises a first connector 2 for a multipolar cable, which in turn comprises first and second electric contacts 21, 22 for input transmission of power and a third electric contact 23 for unidirectional serial input data transmission of data.

The electrical node 1 also comprises a second connector 3 for a multipolar cable, which in turn comprises first and second electric contacts 31, 32 for output transmission of power and a third electric contact 33 for unidirectional serial output data transmission of data.

The first and second contacts 21, 22 of the first connector 2 are electrically connected to the first and second contacts 31, 32 of the second connector 3 respectively via transmission lines 11, 12.

A third connector 4 for a multipolar cable is also provided, which in turn comprises first and second electric contacts 41, 42 for power supply to an electric/electronic point of use (such as the solenoid of a solenoid valve).

The first and second contacts 41, 42 of the third connector 4 are electrically connected to the first and second contacts 21, 22 of the first connector 2 via a circuit that comprises an electrically operable switch 5.

In the illustrated embodiment, the first electric contacts 21, 31 and 41 are connected to ground conductors, whereas the second electric contacts 22, 32, 42 are connected to phase conductors.

In the illustrated embodiment, the phase conductors are 24 Volt-powered.

In the illustrated embodiment, the switch 5 is a Mosfet which acts upon the ground conductor by opening and closing the power circuit of the point of use powered by the third connector 4.

Of course, other solutions may be envisaged for turning off the switch 5, e.g. the use of so-called "miniature relays", particularly monostable miniature relays.

An electronic device 6 is provided, which is connected via a line 13 to the third contact 23 of the first connector 2, for reading data from the third contact 23 of the first connector.

The data received by the device 6 is in the form of frames F (bit serial structures).

In the illustrated example, the frames F comprise a seven-bit field CP (containing numerical information ip representative of the position of the node to be activated in the chain of a daisy-chain bus), a fourteen-bit field CT (containing numerical information it representative of the time, e.g. in thousandths of a second, during which the point of use associated with the node to be activated is required to be active), and a seven-bit Checksum field (which is used to check the integrity of the information contained in the frame F).

In the illustrated example, the frame F comprises 32 bits and transmission is carried out 8 bits at a time.

In a possible embodiment, the data of each frame F is transmitted in synchronous mode, in which case each frame F sent by the bus controller comprises, in addition to the fields CP and CT, at least one initial synchronization bit at the start of each byte.

When the numerical value ip contained in the field CP is equal to a predetermined value x, the device 6 controls the switch 5 to close for a time that is a function of the numerical information it contained in the field CT.

When the numerical information I contained in the field P is different from the predetermined value x, the device 6 increases the value of the numerical information ip originally contained in the field CP of the frame F by a predetermined step s.

Then, the frame F is transmitted in the output direction through a line 14 toward the third contact 33 of the second connector 3 to be sent to the next node of the bus chain, where the frame F is read again.

In a possible embodiment, the field CP contains seven bits, which may be used to select up to 127 nodes of a bus chain, and the field CT contains fourteen bits representative of the time (expressed in milliseconds) during which the selected point of use is required to be active.

In a possible embodiment, the predetermined value x is zero and the increments of the information ip contained in the field CP of the frame F are by a negative unit step (-1).

In the embodiment as described herein, the electronic device 6 comprises a microcontroller 6 with control firmware loaded thereon, the device 6 is supplied with the power transmitted through the first and second contacts 21, 22 of the first connector 2.

The node comprises a casing 7 which leaves the connectors 2, 3 and 4 exposed.

Preferably, the connectors 2, 3 and 4 are quick connectors, e.g. fast-on connectors.

In a possible embodiment, the first connector 3 is either a male connector, in which case the second connector 3 is a female connector, or a female connector, in which case the second connector 3 is a male connector.

This solution avoids the risk of wrong connections during bus formation.

Preferably, the first and second connectors 2, 3 are substantially and/or generally aligned with an axis Y, but oriented in opposite directions.

This arrangement will minimize the length of the sections of the cable 11 that connect the various nodes of the bus, and will improve handleability of the bus.

In a possible embodiment, the nodes are connected together by three-pole cables with the phase conductor, the ground conductor and the data transmission conductor.

Each section of the electric cable comprises a quick-connect plug and a quick-connect socket.

The pitch between electric connectors 1, 1, ... 1 is dependent on needs.

The third connector 4 may have an axis of extension substantially and/or generally orthogonal to the axis Y of the first and second connectors.

This arrangement facilitates connection of the bus nodes to the various points of use.

Each node 1 may further have light indicator means, typically a LED for indicating the presence of voltage in the electronic device 6.

It should be noted that the bus nodes have no address and no other identifier.

In other words, a given electric point of use is actuated without addressing the corresponding bus node.

Since the nodes have no address that identifies them, they may be added or removed without requiring reorganization of the system or a part thereof.

However, the bus controller provides information representative of the node position in the chain that defines the bus.

In the illustrated embodiment, data communication is unidirectional (simplex), with no response line (return wire) from the points of use actuated by the bus.

This arrangement reduces the costs for making the bus nodes without significantly affecting the operational reliability of the bus.

An alternative embodiment of the invention may also provide management of a return wire with an operation check on the controlled points of use.

Generally, daisy-chain buses formed with nodes of the invention may be used to selectively actuate a plurality of points of use.

Due to the relatively high speed of the transmitted data, the points of use may be actuated a few milliseconds from each other, whereby actuation may seem to be simultaneous, but in a stricter sense a point of use at a time is controlled.

In a possible application of the invention, the bus is used for sequential and cyclic actuation of a series of points of use, such as solenoid valves.

The daisy-chain bus formed by the above described devices comprises a chain of nodes for supplying power to electric points of use.

The operation of the bus comprises the steps of:
a) supplying power to the bus;
b) sending a frame F (i.e. a serial data structure) which comprises a field CP, containing first numerical information indicative of the position of the node to be activated in the bus chain, and a second field CT, containing second numerical information representative of the time during which the point of use associated with the node to be activated is required to be active;
c) reading the contents of the field CP and teh field CT;
d) if the content of the field CP is equal to a predetermined value x, actuating the point of use connected to the node for a time that is a function of the information contained in the field CT;
e) if the content of the field CP is different from the predetermined value x, increasing the value of the numerical information contained in the field CP of the frame F by a predetermined step s,
f) transmitting the frame F to the next node,
g) repeating the process from step c).

In one embodiment of the method of operation, as soon as the frame F arrives at one node, a check is made to assess whether the numerical value of the field CP is zero.

If it is, the node activates the point of use connected thereto, if it is not the node decreases the value of the number contained in the field CP by one unit and transmits the frame to the next node, where a new check is made to assess whether the value of the field CP is zero.

## Claims

1. An electrical node (1) for forming daisy-chain buses with simultaneous serial data transmission and power transmission, comprising
a) a first connector (2), which comprises first and second contacts for input transmission of power and a third contact for serial input data transmission of data;
b) a second connector (3), which comprises first and second contacts for output transmission of power and a third contact for serial output data transmission of data, c) a third connector (4) for a multipolar cable, which comprises first and second contacts (41, 42) for power supply to an electric/electronic point of use,;
d) an electronic device (6) which is adapted to read a frame from said third contact of said first connector (2)
**characterized in that**
said first and second connector (2, 3) are suitable for a multipolar cable
the serial data transmission in said first and second connector (2, 3) is unidirectional
said first and second contacts of said first connector (2) being electrically connected to said first and second contact of said second connector (3).
said first and second contacts (41, 42) of said third connector (4) being electrically connected to said first and second contacts of said second connector (2) by a circuit that comprises an electrically operable switch (5) said electronic device (6) which is adapted to read a frame from said third contact of said first connector (2) is in particular adapted to perform:
d1) reading the value of a field (CP) containing first numerical information;
d1) reading the value of a field (CT) containing second numerical information;
and, when said first numerical information is equal to a predetermined value;
d3) closing said switch (5) for a time that is a function of the value of said second numerical information;
and, when said first numerical information is different from the predetermined value;
d4) increasing the value of said first numerical information contained in the field (CP) of said frame by a predetermined step and transmit the frame with the new value for the field (CP) toward said third contact of said second connector (3).

2. A node as claimed in claim 1, wherein said electronic device (6) is supplied with the power transmitted through said first and second contacts of said first connector (2).

3. A node as claimed in claim 1 or 2, comprising the casing and wherein said first, second and third connectors (2, 3, 4) are quick connectors.

4. A node as claimed in one of the preceding claims, wherein one of said first and second connectors (2 or 3) is a male connector, whereas the other connector (3 or 2) is a female connector.

5. A node as claimed in one of the preceding claims, wherein said first and second connectors (2, 3) are substantially and/or generally aligned with an axis (Y), but oriented in opposite directions.

6. A node as claimed in claim 5, wherein said third connector (4) has an axis of extension (Z) which is substantially and/or generally orthogonal to said axis (Y).

## Patentansprüche

1. Elektrischer Knoten (1) zum Bilden von aneinander gereihten Bussen mit gleichzeitiger serieller Datenübertragung und Stromübertragung, umfassend:
a) einen ersten Verbinder (2), der einen ersten und einen zweiten Kontakt für den Eingang der Übertragung von Strom und einen dritten Kontakt für einen seriellen Eingang der Übertragung von Daten umfasst;
b) einen zweiten Verbinder (3), der einen ersten und einen zweiten Kontakt für den Ausgang der Übertragung von Strom und einen dritten Kontakt für den seriellen Ausgang der Übertragung von Daten umfasst,
c) einen dritten Verbinder (4) für ein mehrpoliges Kabel, das einen ersten und einen zweiten Kontakt (41, 42) zur Stromversorgung einer elektrischen oder elektronischen Verbrauchsstelle umfasst;
d) eine elektronische Vorrichtung (6), die dafür ausgelegt ist, einen Frame von dem dritten Kontakt des ersten Verbinders (2) zu lesen,
**dadurch gekennzeichnet, dass**
der erste und der zweite Verbinder (2, 3) für ein mehrpoliges Kabel geeignet sind,
die serielle Datenübertragung in dem ersten und dem zweitem Verbinder (2, 3) unidirektional stattfindet, der erste und der zweite Kontakt des ersten Verbinders (2) elektrisch mit dem ersten und dem zweiten Kontakt des zweiten Verbinders (3) verbunden sind,
der erste und der zweite Kontakt (41, 42) des dritten Verbinders (4) elektrisch mit dem ersten und dem zweiten Kontakt des zweiten Verbinders (2) durch eine Schaltung verbunden ist, die einen elektrisch bedienbaren Schalter (5) umfasst,
die elektronische Vorrichtung (6), die dafür ausgelegt ist, einen Frame von dem dritten Kontakt des ersten Verbinders (2) zu lesen ist, insbesondere dafür ausgelegt ist, Folgendes auszuführen:
d1) Lesen des Wertes eines Feldes (CP), das erste numerische Informationen enthält;
d2) Lesen des Wertes eines Feldes (CT), das zweite numerische Informationen enthält;
und wenn die ersten numerischen Informationen gleich einem vorgegebenen Wert sind:
d3) Schließen des Schalters (5) für eine Zeit, die eine Funktion des Wertes der zweiten numerischen Informationen ist,
und wenn die ersten numerischen Informationen von dem vorgegebenen Wert verschiedenen sind:
d4) Erhöhen des Wertes der ersten numerischen Informationen, die in dem Feld (CP) des Frames enthalten sind, um eine vorgegebene Stufe und Senden des Frames mit dem neuen Wert für das Feld (CP) zu dem dritten Kontakt des zweiten Verbinders (3).

2. Knoten nach Anspruch 1, wobei die elektronische Vorrichtung (6) mit dem Strom versorgt wird, der durch den ersten und den zweiten Kontakt des ersten Verbinders (2) übertragen wird.

3. Knoten nach Anspruch 1 oder 2, der das Gehäuse umfasst, und, wobei der erste, der zweite und der dritte Verbinder (2, 3, 4) Schnellverbinder sind.

4. Knoten nach einem der vorangehenden Ansprüche, wobei der erste oder der zweite Verbinder (2 oder 3) ein Verbindungsstecker ist, während der andere Verbinder (3 oder 2) eine Verbindungsbuchse ist.

5. Knoten nach einem der vorangehenden Ansprüche, wobei der erste und der zweite Verbinder (2, 3) im Wesentlichen und/oder allgemein auf eine Achse (Y) ausgerichtet, aber in entgegengesetzten Richtungen orientiert sind.

6. Knoten nach Anspruch 5, wobei der dritte Verbinder (4) eine Erstreckungsachse (Z) hat, die im Wesentlichen und/oder allgemein orthogonal zu der Achse (Y) verläuft.

## Revendications

1. Noeud électrique (1) pour former des bus en chaînes avec émission simultanée de données sérielles et d'énergie électrique, comprenant
a) un premier connecteur (2), comprenant un premier et un deuxième contact pour l'émission en entrée d'énergie et un troisième contact pour l'émission en entrée sérielle unidirectionnelles de données ;
b) un deuxième connecteur (3), comprenant un premier et un deuxième contact pour l'émission en sortie d'énergie et un troisième contact pour l'émission en sortie sérielle unidirectionnelle de données ;
c) un troisième connecteur (4) pour un câble multipolaire, comprenant un premier et un deuxième contact (41, 42) pour l'alimentation d'un point d'utilisation électrique/électronique ;
d) un dispositif électronique (6) apte à lire une trame émise par ledit troisième contact dudit premier connecteur (2) **caractérisé en ce que**
ledit premier et ledit deuxième connecteur (2, 3) sont appropriés pour un câble multipolaire
ladite émission sérielle de données dans ledit premier et ledit deuxième connecteur (2, 3) est unidirectionnelle
ledit premier contact et ledit deuxième contact dudit premier connecteur (2) étant reliés électriquement audit premier premier et audit deuxième contact dudit deuxième connecteur (3),
ledit premier et ledit deuxième contact (41, 42) dudit troisième connecteur (4) étant relié électriquement audit premier premier et audit deuxième contact dudit deuxième connecteur (3), par un circuit comprenant un interrupteur à commande électrique
ledit dispositif électronique (6) apte à lire une trame émise par ledit troisième contact dudit premier connecteur (2) notamment à effectuer
d1) la lecture de la valeur d'un champ (CP) contenant une première information numérique ;
d2) la lecture de la valeur d'un champ (CT) contenant une deuxième information numérique ;
et, lorsque ladite première information numérique est égale à une valeur prédéterminée :
d3) fermer ledit interrupteur (5) pour une durée qui dépend de la valeur de ladite deuxième information numérique ;
d4) et, lorsque ladite première information numérique est différente d'une valeur prédéterminée
d5) augmenter d'un pas prédéterminé la valeur de ladite première information numérique contenue dans le champ (CP) de ladite trame et transmettre la trame avec la nouvelle valeur pour le champ (CP) vers ledit troisième contact dudit deuxième connecteur (3).

2. Noeud selon la revendication 1, dans lequel ledit dispositif électronique (6) est alimenté avec l'énergie émise à travers ledit premier et ledit deuxième contact dudit premier connecteur (2).

3. Noeud selon la revendication 1 ou 2, comprenant un boîtier et dans lequel ledit premier, ledit deuxième et ledit troisième connecteur (2, 3, 4) sont des connecteurs rapides.

4. Noeud selon n'importe laquelle des revendications précédentes, dans lequel l'un desdits premier et deuxième connecteurs (2 ou 3) est un connecteur mâle, alors que l'autre connecteur (3 ou 2) est un connecteur femelle.

5. Noeud selon l'une des revendications précédentes, dans lequel ledit premier et ledit deuxième connecteur (2, 3) sont sensiblement et/ou généralement alignés avec un axe (Y), mais sont orientés en directions opposées.

6. Noeud selon la revendication 5, dans lequel ledit troisième connecteur (4) présente un axe d'extension (Z) sensiblement et/ou généralement orthogonal audit axe (Y).
